# EUROPÄISCHE PATENTSCHRIFT

(11) **EP 3 246 623 B1**
(45) Veröffentlichungstag und Bekanntmachung des Hinweises auf die Patenterteilung: **19.12.2018**
(21) Anmeldenummer: 17171954.5
(22) Anmeldetag: 19.05.2017
(51) Int. Cl.: F21V 19/00, F21S 4/28, F21V 5/00, F16B 17/00, F16B 5/04, F21Y 115/10, F21Y 103/10

(54) **LEUCHTE MIT LED-LEITERPLATTE AUF BLECHTRÄGER**
LAMP WITH LED PRINTED CIRCUIT BOARD ON SHEET METAL HOLDER
ÉCLAIRAGE COMPRENANT UNE CARTE DE CIRCUIT IMPRIMÉ DEL SUR UN SUPPORT DE TÔLE

(30) Priorität: 20.05.2016 DE 102016109371
(43) Veröffentlichungstag der Anmeldung: 22.11.2017
(73) Patentinhaber: Siteco Beleuchtungstechnik GmbH, 83301 Traunreut (DE)
(72) Erfinder: Hösle, Tobias, 83329 Waging (DE); Brem, Richard, 83301 Traunreut (DE); Weinmann, Ansgar, 83329 Waging (DE); Eckart-Baranowski, Viktor, 84503 Altötting (DE); De Vito, Gianluca, 83301 Traunreut (DE)
(74) Vertreter: Schmidt, Steffen

(56) Entgegenhaltungen:
- EP-A2- 2 447 765
- DE-A1-102010 062 331
- DE-U1-202014 100 922
- DE-U1-202014 100 952
- DE-U1-202015 104 043
- JP-A- H09 267 140
- US-A- 2 321 755
- US-A1- 2008 316 391
- US-A1- 2013 188 367
- US-B1- 6 501 084

## Beschreibung

Die vorliegende Erfindung betrifft eine Leuchte mit einer Leiterplatte, auf der eine oder mehrere LEDs als Leuchtmittel der Leuchte angeordnet sind. Insbesondere betrifft die Erfindung die Art der Befestigung der LED-Leiterplatte in der Leuchte.

Im Leuchtenbau sind Blechgehäuse sehr gängig, weil sie robust sind und kostengünstig herstellbar sind. Die Befestigung der Leuchtmittel erfolgt üblicherweise durch Anschrauben von entsprechenden Leuchtmittelfassungen.

Im Hinblick auf moderendere Leuchtmittel, welche durch LEDs (worunter jede Halbleiterlichtquelle einschließlich organischer LEDs zu verstehen ist) gebildet sind, ist es üblich, Leiterplatten, auf denen die LEDs angeordnet sind, ebenfalls an dem Blechgehäuse durch herkömmliche Befestigungsmittel, insbesondere durch Blechschrauben oder Nieten, anzubringen.

Diese Befestigungsmittel sind jedoch relativ aufwendig anzubringen und für die Massenproduktion vergleichsweise kostenintensiv. Ferner kann sich leicht ein Spalt zwischen der Leiterplatte und dem Gehäuse bilden, wodurch sich die thermische Kopplung der Bauteile verschlechtert.

DE 20 2014 100 952 U1 offenbart eine Leuchte gemäß dem Oberbegriff des Anspruchs 1.

Aufgabe der vorliegenden Erfindung ist es, eine kostengünstige Variante zur Befestigung von LED-Leiterplatten in Blechgehäusen bereitzustellen, welche auch eine gute thermische Ankopplung der Leiterplatte an das Gehäuse ermöglicht.

Die Erfindung wird gelöst durch den Gegenstand nach Anspruch 1.

Eine Besonderheit der Befestigung der LED-Leiterplatte auf dem Träger aus Blech der vorliegenden Erfindung besteht darin, dass keine separaten Befestigungsmittel zur Ausbildung der Befestigung notwendig sind. Alleine die aus dem Träger gebildeten Blechabschnitte genügen, um die Leiterplatte an dem Träger festzuhalten. Diese Verbindung ist zwar nach dem Befestigen nicht mehr ohne weiteres lösbar. Dies ist jedoch für Leiterplatten mit LED in der Regel auch nicht notwendig, da die Lebenserwartung der LED-Leuchtmittel so hoch ist, dass diese Leuchtmittel im Unterschied zu herkömmlichen Leuchtmitteln über die voraussichtliche Lebenserwartung der Leuchte nicht ausgetauscht werden müssen. Ferner ermöglicht es die Befestigung gemäß der vorliegenden Erfindung, die Leiterplatte mit den LEDs direkt in engem Kontakt auf dem Träger anzubringen. Dadurch ist auch eine gute thermische Verbindung zwischen der Leiterplatte und dem Träger aus Blech gewährleistet, so dass der Blechträger zum Ableiten der Wärme dienen kann, die beim Betrieb der LEDs entsteht. Die Öffnung kann von jeder Stelle der Leiterplatte vorgegeben sein. Die Öffnung kann auch als Aussparung am Rand der Leiterplatte gebildet sein.

Gemäß einer bevorzugten Ausführungsform weist der Blechabschnitt wenigstens eine Metallzunge auf. Die Metallzunge lässt sich durch einen einfachen Biegestanzprozess aus dem Blech des Trägers so ausbilden, dass die Metallzunge wenigstens entlang einer Kante mit dem übrigen Blech des Trägers noch verbunden bleibt. Durch Umbiegen der Zunge am freien Ende über den Rand der Öffnung der Leiterplatte wird die Befestigung der Leiterplatte geschlossen.

In einer bevorzugten Ausführungsform umfasst der Blechabschnitt mehrere kontinuierliche oder diskontinuierliche Teilabschnitte, d.h. Teilabschnitte, die miteinander verbunden sind oder durch ebene Abschnitte des Blechträgers voneinander getrennt sind. Die Teilabschnitte umgreifen gegenüberliegende Randabschnitte der Öffnung. Diese Ausführungsform hat den Vorteil, dass die Leiterplatte durch die gegenüberliegenden Teilabschnitte am Rand der Öffnung in zwei entgegengesetzten Richtungen tangential zur Oberfläche des Trägers gehalten wird. Dadurch kann alleine durch eine Öffnung in der Leiterplatte bereits die Leiterplatte an dem Träger festgelegt werden. Alternativ oder zusätzliche können auch mehrere Öffnungen in der Leiterplatte vorhanden sein, durch die sich jeweils wenigstens ein Teilabschnitt des Blechabschnitts erstreckt und um den Rand der jeweiligen Öffnung umgebogen ist. Auch in dieser Ausführungsform kann die Leiterplatte gegenüber dem Träger in ggf. mehrere Tangentialrichtungen gegenüber der Oberfläche des Trägers festgelegt werden.

Gemäß einer Weiterbildung der vorhergehend genannten Ausführungsform können die mehreren Teilabschnitte durch mehrere gegenüberliegende Blechzungen gebildet sein. Diese lassen sich vorzugsweise in einem einzigen Biegestanzprozess aus dem Träger herausbiegen.

Gemäß einer alternativen Ausführungsform kann vorgesehen sein, dass die Teilabschnitte durch einen kontinuierlichen zylinderförmigen Bereich gebildet sind, der sich entlang des Randes der Öffnung durch diese erstreckt und auf der der Anlagefläche entgegengesetzten Seite der Leiterplatte umbörtelt ist. In dieser Ausführungsform wird ein zylinderförmiger Abschnitt aus dem Träger aus Blech in Richtung zur Platine herausgedrückt, die Platine mit der Öffnung auf den zylinderförmigen Abschnitt aufgesteckt und der zylinderförmige Abschnitt nach außen über der Leiterplatte umgebogen. Diese Verbindung sieht auf der dem Träger abgewandten Seite wie eine Hohlniete aus. Im Unterschied zu einer Nietverbindung wird jedoch keine separate Niete verwendet, sondern erfindungsgemäß wird die Verbindung alleine durch das Material des Blechträgers gebildet.

Gemäß einer bevorzugten Ausführungsform liegt die Leiterplatte flächig an dem Träger an. Gegebenenfalls kann eine elektrische Isolierschicht zwischen dem Träger und der Leiterplatter vorgesehen sein, wenn die Leiterplatte auf der zum Träger weisenden Seite spannungsführende Teile aufweist. Vorzugsweise ist die Leiterplatter direkt isolierst oder weist auf der zum Träger weisenden Seite keine Spannungsführenden Teile auf. Ggf. kann auch eine Wärmeleitpaste oder -folie zwischen dem Träger und der Leiterplatte vorgesehen sein. Diese Ausführungsformen haben den Vorteil, dass die Leiterplatte in gutem thermischen Kontakt zu dem Träger gebracht ist, so dass die Wärme der LED über das Blech des Trägers abgeführt werden kann.

Gemäß einer bevorzugten Ausführungsform ist der Träger ein Teil eines aus Blech gebildeten Leuchtengehäuses. In dieser Ausführungsform kann die Leiterplatte direkt an das Leuchtengehäuse angebracht werden, beispielsweise am Bodenabschnitt des Leuchtengehäuses, welches gegenüberliegend der Lichtaustrittsfläche angeordnet ist.

Vorzugsweise weist das Blech des Trägers eine Materialstärke von 0,4 mm bis 2 mm, insbesondere von 0,5 mm bis 1 mm, auf. Diese Materialstärken sind größer dimensioniert als ein für ein Leuchtengehäuse üblicherweise verwendetes Blech. Diese große Blechstärke hat jedoch den Vorteil, dass genügend Material zur Verfügung steht, um nicht nur die Verbindung auszubilden, sondern um außerdem den Wärmetransport von den LEDs in das Gehäuse zu gewährleisten. In dieser Ausführungsform dient der Träger bzw. das gesamte Gehäuse daher nicht nur zur mechanischen Befestigung der LED-Leiterplatte sondern gleichzeitig auch als Kühlkörper für die LED-Leiterplatte.

Gemäß einer bevorzugten Ausführungsform ist die Leiterplatte an dem Träger befestigt, ohne für die Verwendung von weiteren Befestigungsmitteln außer dem einem oder dem mehreren aus Blech des Trägers gebildeten Blechabschnitte. Es hat sich gezeigt, dass die Befestigung durch die Blechabschnitte vollkommen ausreichend ist, um die Leiterplatte festzulegen. Weitere Befestigungsmittel wie Schrauben oder Nieten sind daher entbehrlich.

Erfindungsgemäß ist auf der dem Träger abgewandten Seite der Leiterplatte ein zusätzliches Leuchtenbauteil angeordnet, welches zusammen mit der Leiterplatte mittels des Blechabschnitts gehalten ist. Insbesondere für zusätzliche Leuchtenbauteile, welche präzise zu den auf der Leiterplatte angeordneten Leuchtmitteln ausgerichtet sein müssen, z.B. eine Linsenplatte mit einzelnen Linsen, die zu den LEDs ausgerichtet sein müssen, ist es von Vorteil, die Leiterplatte zusammen mit den zusätzlichen Leuchtenbauteil zu befestigen. Die Befestigungen durch die Blechabschnitte sind dazu geeignet. Gemäß einer bevorzugten Ausführungsform greift das zusätzliche Leuchtenbauteil mit einem oder mehreren Füßen in jeweils eine der Öffnungen der Leiterplatte ein und wird dort zusammen mit der Leiterplatte durch den Blechabschnitt gehalten, indem der Blechabschnitt über den Fuß umgebogen wird.

Gemäß einer weiteren Ausführungsform ist die Leiterplatte nur an Längsrändern gehaltert, derart, dass eine Längsausdehnung der Leiterplatte gegenüber dem Träger möglich ist. Beispielsweise können die Öffnungen in Form von Ausschnitten an der Leiterplatte so gebildet sein, dass sie in Längsrichtung eine etwas größere Abmessung aufweisen, als die Länge des darin eingreifenden Blechabschnitts. Dadurch ist es möglich, dass sich die Leiterplatte in Längsrichtung unabhängig von dem Träger ausdehnen kann. Dies ist insbesondere von Vorteil für besonders lange Leiterplatten in Langfeldleuchten, welche kostengünstiger hergestellt werden können, wenn sie in einem Stück gefertigt sind. Ein Problem bei der Fixierung durch feste Schrauben oder Nieten ist jedoch, dass die Leiterplatte sich nicht unabhängig von dem Träger in Längsrichtung ausdehnen kann, wodurch es im Betrieb der Leuchte zu thermisch induzierten Verwerfungen kommen kann. Dieses Problem wird in der bevorzugten Ausführungsform mittels der Befestigung an den Längsrändern überwunden.

Weitere Merkmale und Vorteile der vorliegenden Erfindung werden aus der nachfolgenden Beschreibung bevorzugter Ausführungsformen deutlich, die in Verbindung mit den Figuren gegeben wird. In den Figuren ist Folgendes dargestellt:
- Figur 1: zeigt eine perspektivische Teilansicht eines Trägers mit darauf befestigter Leiterplatte.
- Figur 2: zeigt einen Ausschnitt der Figur 1 im Bereich der Befestigung.
- Figur 3: zeigt eine Aufsicht auf den Ausschnitt nach Figur 2.
- Figur 4: zeigt eine perspektivische Ansicht entsprechend der Figur 2, jedoch bevor die Leiterplatte angeordnet ist.
- Figur 5: zeigt eine Aufsicht auf den Bereich der Figur 4.
- Figur 6: zeigt einen perspektivischen Teilansicht eines Trägers mit darauf befestigter Leiterplatte für eine alternative Ausführungsform.
- Figur 7: zeigt eine Aufsicht auf den Ausschnitt nach Figur 6.
- Figur 8: zeigt eine Aufsicht auf eine Leuchte einer alternativen Ausführungsform.
- Figur 9: zeigt eine perspektivische teilweise auseinandergezogene Ansicht der Leuchte nach Figur 8.
- Figur 10: zeigt eine perspektivische Teilansicht der Leuchte nach Figur 8 und 9 mit einer alternativen Leiterplatte.

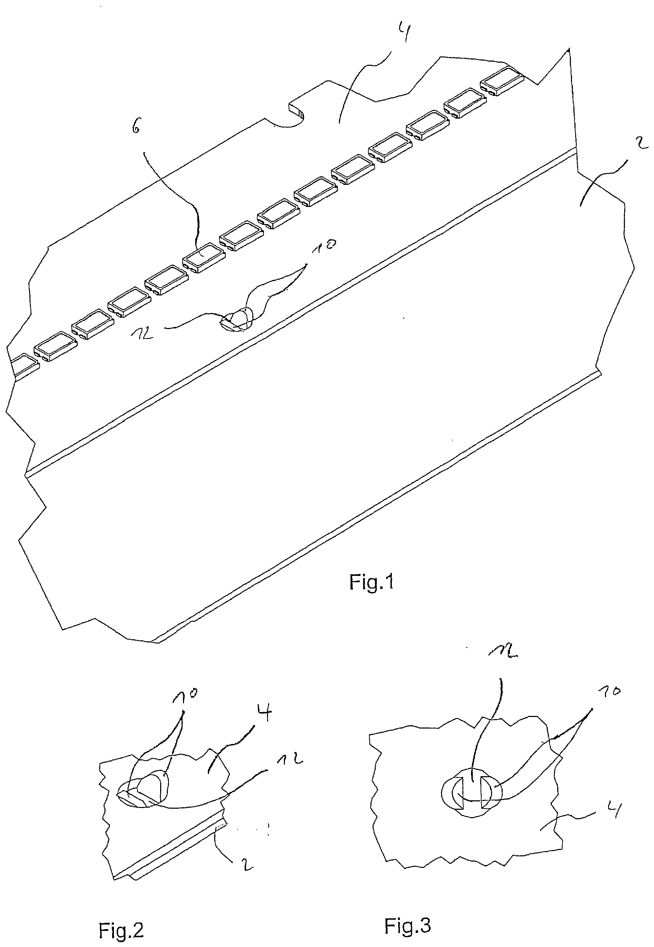

Bezugnehmend auf die Figuren 1 bis 5 wird eine erste Ausführungsform beschrieben.

Eine Leuchte umfasst einen Träger 2, welcher aus Blech, vorzugsweise aus einem Bodenabschnitt eines Leuchtengehäuses, gebildet ist, sowie eine Leiterplatte 4, die darauf angeordnet ist. Die Leiterplatte 4 weist eine Vielzahl von LEDs 6 auf, die in der gezeigten Ausführungsform entlang einer Reihe angeordnet sind.

Bevor die Leiterplatte 4 auf den Träger 2 montiert wird, werden zunächst mittels eines Stanz-/Biege-Prozesses Blechabschnitte 10 aus dem Träger ausgestanzt und in Richtung der Anlagefläche, auf welcher die Leiterplatte 4 auf den Träger aufgelegt werden soll, herausgebogen.

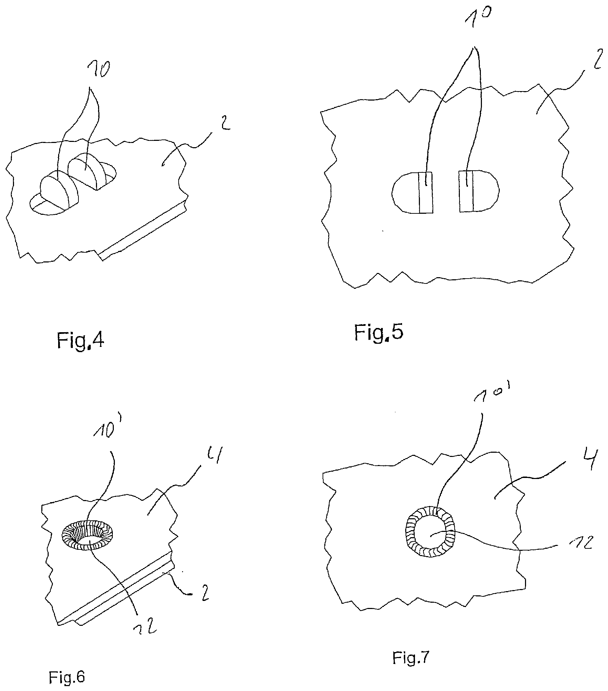

Figur 4 und 5 zeigen die Blechabschnitte 10 in Form von zwei Blechzungen, die aus dem Träger 2 etwa entlang jeweils eines Halbkreises ausgestanzt sind und entlang jeweils einer geraden Kante aus der Ebene des Trägers 2 herausgebogen sind.

Im nächsten Arbeitsschritt wird die Leiterplatte 4 auf den Träger 2 aufgelegt, so dass sich die Blechabschnitte 10 durch eine Öffnung 12 in der Leiterplatte 4 erstrecken. Anschließend werden die Blechabschnitte 10 nach außen umgebogen, so dass sie den Rand der Öffnung 12 auf der dem Träger abgewandten Seite der Leiterplatte 4 umgreifen. Dadurch ist eine formschlüssige Befestigung der Leiterplatte 4 auf dem Träger 2 gebildet. Da der Blechabschnitt 10 zwei gegenüberliegende Zungen umfasst, kann sich die Leiterplatte 4 in keine Richtung parallel zur Oberfläche des Trägers 2 bewegen. Theoretisch könnte sich die Leiterplatte 4 noch um die Blechabschnitte der Befestigung drehen. Dies wird jedoch dadurch ausgeschlossen, dass entweder noch weitere der vorhergehend beschriebenen Befestigungen an dem Träger vorgesehen sind, oder dass die Leiterplatte 4 an wenigstens einer Kante an dem Träger 2 anliegt, so dass ein Verdrehen verhindert wird.

Mit Bezug auf die Figuren 6 und 7 wird eine alternative Ausführungsform beschrieben. Bei dieser Ausführungsform umfasst der Blechabschnitt 10' keine einzelnen Zungen sondern einen kontinuierlichen zylinderförmigen Abschnitt, welcher aus dem Material des Trägers 2 in Richtung zu der Anlagefläche, an welcher die Leiterplatte 4 angelegt wird, herausgedrückt ist. Die Leiterplatte 4 weist die gleiche Öffnung 12 auf, wie in der vorhergehend beschriebenen Ausführungsform erläutert. Mit dieser Öffnung 12 wird die Leiterplatte 4 über dem zylinderförmigen Abschnitt 10' des Trägers gesteckt. Anschließend wird der zylinderförmige Abschnitt 10' auf der dem Träger 2 abgewandten Seite der Leiterplatte 4 umbörtelt. Beispielsweise kann mit einer Kugel, deren Durchmesser etwas größer ist als der Durchmesser des zylinderförmigen Abschnitts 10', der Rand des zylinderförmigen Abschnitts 10' durch Andrücken der Kugel gleichmäßig nach außen umbörtelt werden. Dadurch ist eine Art Nietverbindung gebildet, welche die Leiterpatte 4 an dem Träger 2 hält. Wie vorhergehend beschrieben, könnte sich unter Umständen die Leiterplatte um den zylinderförmigen Abschnitt 10' noch drehen. Dies kann jedoch dadurch verhindert werden, dass mehrere der vorhergehend beschriebenen Befestigungen an der Leiterplatte 4 vorgesehen sind, oder dass die Leiterplatte 4 mit einem Rand an dem Träger anliegt, so dass ein Drehen verhindert wird.

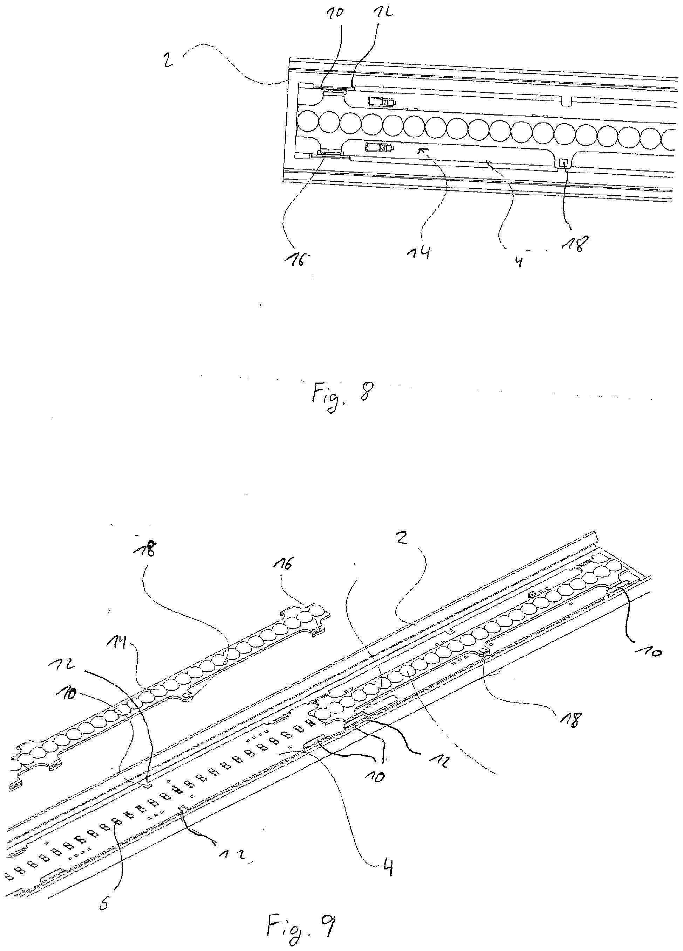

Bezugnehmend auf die Figuren 8 bis 10 wird eine weitere alternative Ausführungsform der Leuchte beschrieben, wobei die gleichen Bezugszeichen, wie vorhergehend benutzt, für entsprechende Merkmale verwendet werden.

In dieser Ausführungsform sind die Leiterplatten länglich mit z.B. einer Reihe oder einer Doppelreihe von LEDs 6. An den Längsrändern der Leiterplatten 4 sind die Öffnungen 12 in Form von Ausschnitten am Rand vorgesehen. In diese Ausschnitte greifen jeweils ein Blechabschnitt 10 ein, welcher aus dem unter der Leiterplatte 4 liegenden Blechträger 2 herausgebogen ist. Die Leiterplatten 4 werden nur an den Längsrändern gehalten, wobei der Ausschnitt 12 etwas länger als der Blechabschnitt 10 ist, so dass sich bei thermischer Erwärmung die Leiterplatten 4 unabhängig von dem darunterliegenden Träger 2 ausdehnen können. Dies hat einen Vorteil insbesondere bei Verwendung von sehr langen Leiterplatten in Langfeldleuchten. Eine lange durchgehende Leiterplatte 4 ist kostengünstiger herzustellen. Ferner haben die Öffnungen 12 in Form von Ausschnitte an den Längsrändern den Vorteil, dass die Leiterplatte selbst nicht unterbrochen ist, so dass auf der Lichtaustrittsseite keine strukturellen oder farblichen Unterschiede wahrzunehmen sind.

Gemäß der Ausführungsform nach Figur 8 bis 10 ist ferner ein zusätzliches Leuchtenbauteil in Form einer Linsenabdeckung 14 auf der Leiterplatte 4 direkt über den LEDs 6 angeordnet. Die Linsenabdeckung 14 weist einzelne Linsenelemente auf, die jeweils einer oder einer Gruppe von LEDs 6 zugeordnet ist.

Die Linsenabdeckung 14 ist mittels der gleichen Blechabschnitte 10 befestigt wie die Leiterplatte 4. Dazu weist die Linsenabdeckung Füße 16 auf, welche in Form einer Abwinkelung in Richtung zu dem Träger 2 gebildet sind. Die Füße 16 greifen in jeweils eine Öffnung 12 der Leiterplatte 4 neben dem Blechabschnitt 10 ein, wobei der Blechabschnitt 10 über dem Fuß 16 umgebogen wird, so dass sowohl die Linsenabdeckung 14 als auch die Leiterplatte 4 durch den Blechabschnitt 10 an dem Träger 2 gehalten wird.

Ferner kann an der Linsenabdeckung 14 oder jedem anderen zusätzlichen Leuchtenbauteil noch wenigstens ein weiterer Positionierungsfuß 18 vorgesehen sein, der ebenfalls in eine Öffnung 12 der Leiterplatte eingreift. Der Positionierungsfuß wird jedoch nicht mit einem Blechabschnitt 10 des Trägers gesichert, sondern ist nur mit der Leiterplatte 4 in Verbindung. Dadurch kann der Positionierungsfuß 18 passgenau in die Leiterplatte eingreifen, um die Linsenabdeckung oder ein anderes zusätzliches Leuchtenbauteil 14 gegenüber den LEDs 6 zu positionieren. Die Linsenabdeckung 14 kann sich bei thermischer Ausdehnung zusammen mit der Leiterplatte 14 mitbewegen, so dass die Ausrichtung der Linsen gegenüber den LEDs auch bei einer unterschiedlichen thermischen Ausdehnung gegenüber dem Träger 2 erhalten bleibt.

Ferner können auch in dieser Ausführungsform einige der Blechabschnitte 10 in Öffnungen 12 der Leiterplatte 4 eingreifen, ohne an dem zusätzlichen Leuchtenbauteil 14 anzugreifen. Beispielsweise kann an einer Seite der Platine 14 ein Positionierungsfuß 18 in einen seitlichen Ausschnitt der Leiterplatte eingreifen, um eine Leuchtenabdeckung zu positionieren, während auf der gegenüberliegenden Seite ein kürzerer Blechabschnitt 10 in einen Ausschnitt 12 der Leiterplatte eingreift, um die Leiterplatte zu halten.

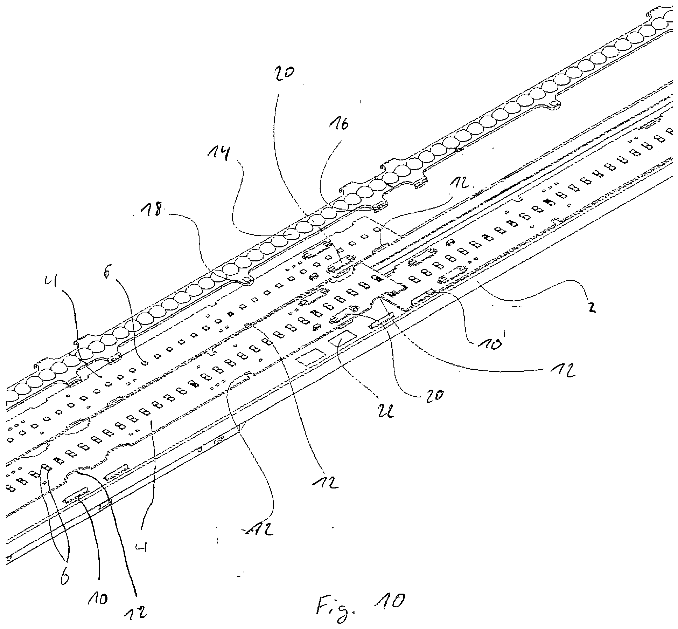

Gemäß einer in Figur 10 dargestellten Ausführungsform können auch unterschiedliche Leiterplatten 4 mit jeweils den gleichen Leuchtenkomponenten, wie vorhergehend beschrieben, verbunden werden. In Figur 10 sind zwei verschiedene Leiterplatten 4 dargestellt, wobei eine schmälere Ausführung lediglich eine einzelne Reihe von LEDs 6 aufweist, während die breitere Ausführung eine Doppelreihe von LEDs 6 aufweist. Der Träger 2 und die Linsenabdeckung 14 können jedoch gleich bleiben, so dass ein System unterschiedlicher Leuchten aus teilweise gleichen Bauteilen gebildet werden kann. Bei der Figur 10 ist zu verstehen, dass jeweils nur eine der zwei übereinander dargestellten Leiterplatten 4 in der Leuchte eingesetzt wird. Damit die unterschiedlich breiten Leiterplatten 4 mit dem gleichen Blechabschnitt 10 des Trägers 2 zusammen wirken können, sind die Ausschnitte 12 bei der breiteren Leiterplatte 4 T-förmig ausgestaltet, um tiefer in die Leiterplatte 4 einzugreifen, im Vergleich zu den einfachen Ausschnitten 12 in der schmäleren Leiterplatte 4.

Ferner ist in der Figur 10 dargestellt, dass außer den Füßen 16 der Linsenabdeckung 14 noch weiterer Bauteile der Leucht in Ausschnitte des Trägers 2 eingreifen können. Beispielsweise ist eine Klemme 20 an der Leiterplatte 4 vorgesehen, die in eine Öffnung 22 des Trägers eingreift, um von der Gegenseite kontaktiert werden zu können. Die Öffnung 22 besitzt jedoch keinen Blechabschnitt, der aus der Öffnung 22 in Richtung zur Leiterplatte hervorsteht. Die Öffnung 22 ist vollständig ausgestanzt.

Die vorhergehend beschriebene Ausführungsformen können modifiziert werden, ohne von dem Umfang der Erfindung, der durch die Patentansprüche definiert ist, abzuweichen. Insbesondere können beispielsweise mehr als zwei Zungen als Blechabschnitte vorgesehen sein. Es können drei oder mehr Zungen entlang eines Kreisumfangs vorgesehen sein, die jeweils nach außen um die Leiterplatte umgebogen werden. Die Zungen können jeweils einzeln durch eine Öffnung der Leiterplatte hindurchgreifen oder mehr als zwei Zungen greifen durch eine Öffnung hindurch. Die Öffnung in der Leiterplatte kann, aber muss nicht, kreisrund sein.

### BEZUGSZEICHENLISTE

- 2: Träger
- 4: Leiterplatte
- 6: LED
- 10, 10': Blechabschnitt, insbesondere zungenförmiger bzw. zylinderförmiger Abschnitt
- 12: Öffnung in Leiterplatte
- 14: zusätzliches Leuchtenbauteil, insbesondere Linsenabdeckung
- 16: Fuß
- 18: Positionierungsfuß
- 20: Klemme
- 22: Öffnung

## Patentansprüche

1. Leuchte mit einer Leiterplatte (4) und einem Gehäuse, welches wenigstens einen Träger (2) aus Blech aufweist, der als eine Anlagefläche für die Leiterplatte (4) dient, die eine oder mehrere LEDs (6) trägt,
wobei die Leiterplatte (4) wenigstens eine Öffnung (12) aufweist, durch die sich ein mit dem Träger (2) einstückig verbundener Blechabschnitt (10; 10') erstreckt, der auf der der Anlagefläche entgegengesetzten Seite der Leiterplatte (4) über einen Rand der Öffnung (12) umgebogen ist, **dadurch gekennzeichnet, dass** auf der dem Träger (2) abgewandten Seite der Leiterplatte (4) ein zusätzliches Leuchtenbauteil (14) angeordnet ist, welches zusammen mit der Leiterplatte (4) mittels des Blechabschnitts (10) gehalten ist.

2. Leuchte nach Anspruch 1, wobei der Blechabschnitt (10) wenigstens eine Blechzunge aufweist.

3. Leuchte nach einem der vorhergehenden Ansprüche, wobei die Öffnung (12) als ein Loch in der Leiterplatte (4) gebildet ist oder als eine Aussparung am Rand der Leiterplatte (4) gebildet ist.

4. Leuchte nach einem der vorhergehenden Ansprüche, wobei der Blechabschnitt (10; 10') mehrere kontinuierliche oder diskontinuierliche Teilabschnitte umfasst, die gegenüberliegende Randabschnitte der Öffnung umgreifen.

5. Leuchte nach Anspruch 4, wobei die mehreren Teilabschnitte durch mehrere gegenüberliegende Blechzungen gebildet sind.

6. Leuchte nach Anspruch 4, wobei die Teilabschnitte durch einen kontinuierlichen zylinderförmigen Bereich gebildet sind, der sich entlang des Randes der Öffnung (12) durch diese erstreckt und auf der der Anlagefläche entgegengesetzten Seite der Leiterplatte (4) umbörtelt ist.

7. Leuchte nach einem der vorhergehenden Ansprüche, wobei die Leiterplatte (4) flächig an dem Träger (2) mit oder ohne einer Zwischenschicht anliegt.

8. Leuchte nach Anspruch 7, wobei zwischen der Leiterplatte (4) und der Anlagefläche eine Isolierschicht angeordnet ist.

9. Leuchte nach einem der vorhergehenden Ansprüche, wobei der Träger (2) ein Teil eines aus Blech gebildeten Leuchtengehäuses ist.

10. Leuchte nach einem der vorhergehenden Ansprüche, wobei das Blech des Trägers (2) eine Materialstärke von 0,4 mm bis 2 mm, bevorzugt von 0,5 mm bis 1 mm, aufweist.

11. Leuchte nach einem der vorhergehenden Ansprüche, wobei die Leiterplatte (4) an dem Träger (2) befestigt ist ohne Verwendung von weiteren Befestigungsmitteln außer dem eine oder mehreren aus Blech des Trägers gebildeten Blechabschnitte (10; 10').

12. Leuchte nach einem der vorhergehenden Ansprüche, wobei das zusätzliche Leuchtenbauteil (14) mit einem oder mehreren Füßen (16) in wenigstens eine der Öffnungen (12) der Leiterplatte (4) eingreift.

13. Leuchte nach einem der vorhergehenden Ansprüche, wobei das zusätzliche Leuchtenbauteil (14) ein Linsenträger ist, welcher mehrere Linsen umfasst, die jeweils wenigstens einer LED zugeordnet sind.

14. Leuchte nach einem der vorhergehenden Ansprüche, wobei die Leiterplatte (4) nur an Längsrändern gehalten ist, derart, dass eine Längenausdehnung der Leiterplatte (4) gegenüber dem Träger (2) ermöglicht ist.

## Claims

1. Luminaire with an LED printed circuit board (4) and a housing, which comprises at least one holder (2) made of sheet metal, which serves as a contact surface for the LED printed circuit board (4), which carries one or more LED's (6),
wherein the LED printed circuit board (4) exhibits at least one opening (12), extending through which is a sheet metal section (10; 10') connected as one piece to the holder (2), which, on the side of the LED printed circuit board (4) opposite the contact surface, is bent around an edge of the opening (12), **characterized in that**, on the side of the LED printed circuit board (4) facing away from the holder (2) an additional lamp component (14) is arranged, which is held together with the LED printed circuit board (4) by means of the sheet metal section (10).

2. Luminaire according to claim 1, wherein the sheet metal section (10) comprises at least one sheet metal tongue.

3. Luminaire according to any one of the preceding claims, wherein the opening (12) is formed as a hole in the LED printed circuit board (4), or as a cut-out at the edge of the LED printed circuit board (4).

4. Luminaire according to any one of the preceding claims, wherein the sheet metal section (10; 10') comprises a plurality of continuous or discontinuous part sections which engage around the opposing edge sections of the opening.

5. Luminaire according to claim 4, wherein the plurality of part sections are formed by a plurality of opposing sheet metal tongues.

6. Luminaire according to claim 4, wherein the part sections are formed by a continuous cylindrical section, which extends along the edge of the opening (12) and through it, and is braided around the side of the LED printed circuit board (4) opposite the contact surface.

7. Luminaire according to any one of the preceding claims, wherein the LED printed circuit board (4) is in contact full surface on the holder (2), with or without an intermediate layer.

8. Luminaire according to claim 7, wherein an insulation layer is arranged between the LED printed circuit board (4) and the contact surface.

9. Luminaire according to any one of the preceding claims, wherein the holder (2) is a part of a lamp housing formed from sheet metal.

10. Luminaire according to any one of the preceding claims, wherein the sheet metal of the holder (2) exhibits a material thickness of 0.4 mm to 2 mm, preferably from 0.5 mm to 1 mm.

11. Luminaire according to any one of the preceding claims, wherein the LED printed circuit board (4) is secured to the holder (2) without the use of further securing means apart from the one or more sheet metal sections (10; 10') formed from sheet metal of the holder.

12. Luminaire according to any one of the preceding claims, wherein the additional lamp component (14) engages with one or more feet (16) into at least one of the openings (12) in the LED printed circuit board (4).

13. Luminaire according to any one of the preceding claims, wherein the additional lamp component (14) is a lens holder, which comprises a plurality of lenses, which in each case are assigned to an LED.

14. Luminaire according to any one of the preceding claims, wherein the LED printed circuit board (4) is held only at longitudinal edges, in such a way that a longitudinal extension of the LED printed circuit board (4) in relation to the holder (2) is made possible.

## Revendications

1. Luminaire avec un circuit imprimé (4) et un boîtier, qui comprend au moins un support (2) en tôle, qui sert de surface d'appui pour le circuit imprimé (4), qui supporte une ou plusieurs LED (6),
le circuit imprimé (4) comprenant au moins une ouverture (12) à travers laquelle s'étend une portion de tôle (10 ; 10'), reliée d'une seule pièce avec le support (2), qui est pliée, sur le côté du circuit imprimé (4) opposé à la surface d'appui, au-dessus d'un bord de l'ouverture (12), **caractérisé en ce que**, sur le côté du circuit imprimé (4) opposé au support (2), est disposé un composant de luminaire supplémentaire (14) qui est maintenu avec le circuit imprimé (4) au moyen de la portion de tôle (10).

2. Luminaire selon la revendication 1, la portion de tôle (10) comprenant au moins une languette en tôle.

3. Luminaire selon l'une des revendications précédentes, l'ouverture (12) étant réalisée sous la forme d'un trou dans le circuit imprimé (4) ou sous la forme d'un évidement sur le bord du circuit imprimé (4).

4. Luminaire selon l'une des revendications précédentes, la portion de tôle (10 ; 10') comprenant plusieurs parties continues ou discontinues qui entourent des portions de bords opposées de l'ouverture.

5. Luminaire selon la revendication 4, les plusieurs parties étant constituées de plusieurs languettes en tôle opposées.

6. Luminaire selon la revendication 4, les parties étant constituées d'une zone cylindrique continue qui s'étend le long du bord de l'ouverture (12) à travers celle-ci et qui est sertie sur le côté du circuit imprimé (4) opposé à la surface d'appui.

7. Luminaire selon l'une des revendications précédentes, le circuit imprimé (4) s'appuyant sur toute sa surface contre le support (2) avec ou sans une couche intermédiaire.

8. Luminaire selon la revendication 7, une couche d'isolation étant disposée entre le circuit imprimé (4) et la surface d'appui.

9. Luminaire selon l'une des revendications précédentes, le support (2) faisant partie d'un boîtier de luminaire constitué de tôle.

10. Luminaire selon l'une des revendications précédentes, la tôle du support (2) présentant une épaisseur de matériau de 0,4 mm à 2 mm, de préférence de 0,5 mm à 1 mm.

11. Luminaire selon l'une des revendications précédentes, le circuit imprimé (4) étant fixé sur le support (2) sans autres dispositifs de fixation qu'une ou plusieurs portions de tôle (10 ; 10') constituées de la tôle du support.

12. Luminaire selon l'une des revendications précédentes, le composant de luminaire supplémentaire (14) s'emboîtant avec un ou plusieurs pieds (16) dans au moins une des ouvertures (12) du circuit imprimé (4).

13. Luminaire selon l'une des revendications précédentes, le composant de luminaire supplémentaire (14) étant un support de lentilles qui comprend plusieurs lentilles correspondant chacune à au moins une LED.

14. Luminaire selon l'une des revendications précédentes, le circuit imprimé (4) étant maintenu uniquement au niveau de bords longitudinaux de façon à permettre une dilatation longitudinale du circuit imprimé (4) par rapport au support (2).
